# EUROPEAN PATENT SPECIFICATION

(11) **EP 3 609 105 B1**
(45) Date of publication and mention of the grant of the patent: **16.07.2025**
(21) Application number: 18794129.9
(22) Date of filing: 04.05.2018
(51) Int. Cl.: H04L 1/1867, H04L 1/00

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 05.05.2017 CN 201710314014
(43) Date of publication of application: 12.02.2020
(73) Proprietor: Huawei Technologies Co., Ltd., Longgang District Shenzhen, Guangdong 518129 (CN)
(72) Inventor: LYU, Yongxia, Shenzhen Guangdong 518129 (CN); WANG, Jingnan, Shenzhen Guangdong 518129 (CN); MA, Ruixiang, Shenzhen Guangdong 518129 (CN); WEN, Ronghui, Shenzhen Guangdong 518129 (CN)
(74) Representative: Pfenning, Meinig & Partner mbB
(86) International application number: PCT/CN2018/085621
(87) International publication number: WO 2018/202136

(56) References cited:
- EP-A1- 1 826 939
- WO-A1-2015/035790
- CN-A- 101 060 389
- CN-A- 103 368 706
- CN-A- 103 795 505
- CN-A- 104 486 049
- US-A1- 2011 249 630
- US-A1- 2012 147 832
- US-A1- 2016 302 189
- US-B2- 9 370 020

## Description

### TECHNICAL FIELD

This application relates to to data transmission methods, data transmission devices, a computer readable storage medium and a computer program product.

### BACKGROUND

In 5th generation mobile communications (5 Generation, 5G) technologies, a higher requirement is raised on aspects such as a transmission delay and reliability of a transport block. Particularly, for ultra-reliable low-latency communication (Ultra-reliable Low-latency Communication, URLLC) services, a relatively low transmission delay and relatively high transmission reliability are required.

To meet a reliability requirement under a strict delay requirement, a mechanism of repeated transmission for a plurality of times is proposed. A transmit end obtains reliability gain by repeatedly sending a same transport block for a plurality of times. However, the mechanism brings a large amount of redundant transmission, and a case in which a transport block cannot be correctly received still exists in the mechanism.

US 2011/0249630 Al discloses a method of transmitting data in a wireless access system and a packet retransmitting method therein. The method includes receiving an initial control messaging including information required for a packet retransmission from a base station, transmitting the packet to be provided with a service from the base station, and if a non-acknowledgement signal, an NACK signal, is received from the base station, retransmitting the packet corresponding to the NACK signal to the base station using the information required for the packet retransmission and included in the initial control message. Since a separate control message needs not to be transmitted in case of packet retransmission, weight resources are saved and an overhead is reduced by retransmitting a packet via a previously allocated retransmission region without the separate control message. If the base station is unable to receive a VoIP packet, the base station transmits a NACK signal to the mobile station and a control message for retransmission to the mobile by enabling a new modulation and coding scheme level and new resource allocation region information.
EP 1 826 939 Al discloses a method of transmitting data packets over a plurality of dynamically allocated resource blocks in at least one or a combination of a time, code or frequency domain on a shared channel of a wireless communication system, comprising the steps: selecting a number of resource block candidates for potential transmission of data packets destined for a receiver; and transmitting the data packet to the receiver using at least one allocated resource block from the selected resource block candidates.

### SUMMARY

This application provides a data transmission method, to help reduce redundant transmission.

According to a first aspect, a data transmission method is provided. The method includes: determining, by a first device, a first resource and a second resource that are used to send a first transport block, where the first resource and the second resource are discontinuous in time domain; sending, by the first device, the first transport block to a second device on the first resource; and sending, by the first device, the first transport block to the second device on the second resource; wherein an interval between the first resource and the second resource in time domain is related to at least one of a first set time used to send first feedback information and a second set time used to send second feedback information, wherein the first feedback information is used to indicate that the first transport block is correctly received or is not correctly received, and the second feedback information is used to indicate channel quality, wherein before the sending the first transport block to the second device on the second resource, the method further comprises: receiving the second feedback information on a third resource, wherein the interval between the first resource and the second resource in time domain is greater than or equal to an interval between the first resource and the third resource in time domain, and the third resource is determined based on the second set time; and wherein the second feedback information includes at least one of a channel quality indicator, CQI, a signal to interference plus noise ratio, SINR, a signal to interference ratio, SIR, and a modulation and coding scheme level, MCS level. The method further comprises: adjusting a sending parameter based on the second feedback information, wherein the sending parameter includes at least one of a modulation manner, a coding manner, and transmission duration; and sending the first transport block on the second resource by using the adjusted sending parameter. Additionally, the second set time is an interval between measuring a signal and measuring feedback information corresponding to the signal in time domain; and the interval between the first resource and the third resource in time domain is equal to the second set time.

Compared with the prior art in which the first transport block is repeatedly and blindly transmitted for a plurality of times, there is an interval between the first resource and the second resource, to help reduce redundant data transmission.

Before the sending, by the first device, the first transport block to the second device on the second resource, the method further includes: receiving, by the first device, second feedback information on a third resource, where an interval between the first resource and the second resource in time domain is greater than or equal to an interval between the first resource and the third resource in time domain, and the third resource is determined based on a second set time.

In this way, the interval between the first resource and the second resource in time domain is greater than or equal to the interval between the first resource and the third resource in time domain, and the first device may send the first transport block on the second resource based on the second feedback information. Specifically, the first device may determine, based on the second feedback information, a parameter (for example, a modulation manner or an encoding manner) for sending the first transport block on the second resource, and the first device sends the first transport block on the second resource based on the parameter, to help increase a probability of successful transmission.

Optionally, in a possible implementation, the sending, by the first device, the first transport block to the second device on the second resource includes: sending, by the first device based on the second feedback information, the first transport block to the second device on the second resource.

In this embodiment of this application, the first device sends the first transport block on the second resource based on the second feedback information, so that a transmission probability may be increased.

Optionally, in a possible implementation, the sending, by the first device, the first transport block to the second device on the second resource includes: determining, by the first device based on the second feedback information, whether to send the first transport block to the second device on the second resource; and if the first device determines, based on the second feedback information, to send the first transport block to the second device on the second resource, sending, by the first device based on the second feedback information, the first transport block to the second device on the second resource.

In this embodiment of this application, the first device may determine, based on the second feedback information, whether to send the first transport block on the second device. The solution helps reduce redundant transmission.

In a possible implementation, after the sending, by the first device, the first transport block to a second device on the first resource, the method further includes: receiving, by the first device, first feedback information on a fourth resource, where the fourth resource is determined based on a first set time; and after the sending, by the first device, the first transport block to the second device on the second resource, the method further includes: sending, by the first device, the first transport block to the second device on a fifth resource, where an interval between the first resource and the fifth resource in time domain is greater than or equal to an interval between the first resource and the fourth resource in time domain.

In this embodiment of this application, after sending the first transport block on the second resource, the first device may receive the first feedback information, and the first device may send the first transport block on the fifth resource based on the first feedback information, to help improve data transmission reliability.

Optionally, in a possible implementation, the interval between the first resource and the fourth resource in time domain is greater than or equal to the interval between the first resource and the second resource in time domain.

In a possible implementation, the method further includes: sending, by the first device, the first transport block to the second device on the fifth resource, where the interval between the first resource and the second resource in time domain is different from an interval between the second resource and the third resource.

In this embodiment of this application, the first device may first send the first transport block on the second resource before receiving the first feedback information, to help reduce a data transmission delay.

In a possible implementation, before the sending, by the first device, the first transport block to the second device on the second resource, the method further includes: receiving, by the first device, the first feedback information on a sixth resource, where the interval between the first resource and the second resource in time domain is greater than or equal to an interval between the first resource and the sixth resource in time domain, and the sixth resource is determined based on the first set time.

In this embodiment of this application, the first device may send the first transport block on the second resource based on the first feedback information, to help improve data transmission reliability.

Optionally, in a possible implementation, the first feedback information is specifically used to indicate that the first transport block is not correctly received, and the sending, by the first device, the first transport block to the second device on the second resource includes: sending, by the first device based on the first feedback information, the first transport block to the second device on the second resource.

In this embodiment of this application, the first device determines that the first transport block is not correctly received and then retransmits the first transport block, to help reduce redundant transmission.

Optionally, in a possible implementation, the first feedback information is specifically used to indicate that the first transport block is received, and the sending, by the first device, the first transport block to the second device on the second resource includes: sending the first transport block to the second device on the second resource when the first device does not receive the first feedback information on the sixth resource, where the sixth resource is determined based on the first set time.

In this embodiment of this application, when the first device does not receive the first feedback information, the first device may determine that transmission of the first transport block fails, and further retransmits the first transport block, to help reduce redundant transmission.

In a possible implementation, the first device is a network device, the second device is a terminal device, and before the sending, by the first device, the first transport block to a second device on the first resource, the method further includes: sending, by the network device, scheduling grant signaling to the terminal device, where the scheduling grant signaling indicates the first resource and the second resource.

In this embodiment of this application, the network device may indicate the first resource and the second resource in advance to the terminal device, and the network device sends a transport block on the first resource and the second resource, to help reduce the data transmission delay.

Optionally, in a possible implementation, the scheduling grant signaling includes physical layer signaling.

In a possible implementation, the first device is a terminal device, the second device is a network device, and before the sending, by the first device, the first transport block to a second device on the first resource, the method further includes: receiving, by the terminal device, scheduling grant signaling sent by the network device, where the scheduling grant signaling indicates the first resource and the second resource; and the determining, by a first device, a second resource includes: determining, by the terminal device, the second resource based on the scheduling grant signaling and the first resource.

In this embodiment of this application, the terminal device may obtain the first resource and the second resource, where the second resource may be used as a reserved resource, and the terminal device sends the transport block on the reserved resource, to help reduce the data transmission delay.

In a possible implementation, the scheduling grant signaling includes: at least one of the first set time and the second set time, where the scheduling grant signaling indicates the second resource by using the at least one of the first set time and the second set time.

In this embodiment of this application, the scheduling grant signaling may indicate the first resource and the second resource to the terminal device in a plurality of manners, and the solution has relatively high flexibility and applicability.

According to a second aspect, a data transmission method is provided. The method includes: detecting, by a second device on a first resource, a first transport block sent by a first device; and detecting, by the second device on a second resource, the first transport block sent by the first device; wherein the first resource and the second resource are discontinuous in time domain, wherein an interval between the first resource and the second resource in time domain is related to at least one of a first set time used to send first feedback information and a second set time used to send second feedback information, wherein the first feedback information is used to indicate that the first transport block is correctly received or is not correctly received, and the second feedback information is used to indicate channel quality, wherein before the detecting, on a second resource, the first transport block sent by the first device, the method further comprises: sending the second feedback information to the first device on a third resource, wherein the interval between the first resource and the second resource in time domain is greater than or equal to an interval between the first resource and the third resource in time domain, and the third resource is determined based on the second set time; and wherein the second feedback information includes at least one of a channel quality indicator, CQI, a signal to interference plus noise ratio, SINR, a signal to interference ratio, SIR, and a modulation and coding scheme level, MCS level. The second feedback information is used to adjust a sending parameter for sending the first transport block on the second resource, wherein the sending parameter includes at least one of a modulation manner, a coding manner, and transmission duration. Additionally, the second set time is an interval between measuring a signal and measuring feedback information corresponding to the signal in time domain; and the interval between the first resource and the third resource in time domain is equal to the second set time.

Compared with the prior art in which a second terminal device blindly receives the first transport block, there is an interval between the first resource and the second resource, to help reduce redundant data transmission.

Before the detecting, by the second device on a second resource, the first transport block sent by the first device, the method further includes:
sending, by the second device, the second feedback information to the first device on a third resource, where an interval between the first resource and the second resource in time domain is greater than or equal to an interval between the first resource and the third resource in time domain, and the third resource is determined based on the second set time.

In this way, the second device sends the second feedback information on the third resource, so that the first device sends the first transport block on the second resource based on the second feedback information, to help increase a probability of successful transmission.

Optionally, the second device measures a signal received on the first resource and sends the second feedback information to the first device.

In a possible implementation, after the detecting, by a second device on a first resource, a first transport block sent by a first device, the method further includes: sending, by the second device on a fourth resource, first feedback information to the first device, where the fourth resource is determined based on a first set time; and after the detecting, by the second device on a second resource, the first transport block sent by the first device, the method further includes: detecting, by the second device, the first transport block on a fifth resource, where an interval between the first resource and the fifth resource in time domain is greater than or equal to an interval between the first resource and the fourth resource in time domain.

In a possible implementation, before the detecting, by the second device on a second resource, the first transport block sent by the first device, the method further includes: sending, by the second device on a sixth resource, the first feedback information to the first device, where the interval between the first resource and the second resource in time domain is greater than or equal to an interval between the first resource and the sixth resource in time domain, and the sixth resource is determined based on the first set time.

Optionally, in a possible implementation, the second device sends the first feedback information to the first device based on whether the first transport block is detected on the first resource.

In a possible implementation, the first device is a network device, the second device is a terminal device, and before the detecting, by a second device on a first resource, a first transport block sent by a first device, the method further includes: receiving, by the terminal device, scheduling grant signaling sent by the network device, where the scheduling grant signaling indicates the first resource and the second resource; and the determining, by the second device, a second resource includes: determining, by the second device, the second resource based on the scheduling grant signaling.

In a possible implementation, the first device is a terminal device, the second device is a network device, and before the detecting, by a second device on a first resource, a first transport block sent by a first device, the method further includes: sending, by the network device, scheduling grant signaling to the terminal device, where the scheduling grant signaling indicates the first resource and the second resource.

In a possible implementation, the method further includes: detecting, by the second device, the first transport block on the fifth resource, where the interval between the first resource and the second resource in time domain is different from an interval between the second resource and the third resource.

In a possible implementation, the scheduling grant signaling includes: at least one of the first set time and the second set time, where the scheduling grant signaling indicates the second resource by using the at least one of the first set time and the second set time.

In a possible implementation, the interval between the first resource and the second resource in time domain is related to at least one of the first set time used to send the first feedback information and the second set time used to send the second feedback information, where the first feedback information is used to indicate that the first transport block is correctly received or is not correctly received, and the second feedback information is used to indicate channel quality; and the first device sends, on the second resource, the first transport block to the second device.

Further, the interval between the first resource and the second resource in time domain is related to at least one of the first set time and the second set time, so that the first device obtains a receiving status of the first transport block, and sends the first transport block on the second resource based on the receiving status of the first transport block, to help increase a probability of successful transmission.

Optionally, in a possible implementation, the second feedback information may include at least one of a channel quality indicator CQI, a signal to interference plus noise ratio SINR, a signal to interference ratio SIR, a block error rate BLER, a modulation and coding scheme MCS level, and the like used to indicate channel quality.

In this embodiment of this application, the second feedback information may include a plurality of types of information, and this solution has relatively high flexibility and applicability.

Optionally, in a possible implementation, the interval between the first resource and the second resource in time domain is greater than or equal to the first set time; or the interval between the first resource and the second resource in time domain is greater than or equal to the second set time; or the interval between the first resource and the second resource in time domain is greater than or equal to the first set time and greater than or equal to the second set time; or the interval between the first resource and the second resource in time domain is greater than or equal to the second set time and less than or equal to the first set time.

In this embodiment of this application, the interval between the first resource and the second resource in time domain may be flexibly determined based on at least one of the first set time and the second set time, so that the first device can send the first transport block on the second resource based on at least one of the first feedback information and the second feedback information, to help increase a probability of successful transmission.

According to a third example, a data transmission device configured to perform the method according to the first aspect or any possible implementation of the first aspect is provided. Specifically, the device includes units configured to perform the method according to the first aspect or any possible implementation of the first aspect.

According to a fourth example, a data transmission device configured to perform the method according to the second aspect or any possible implementation of the second aspect is provided. Specifically, the device includes units configured to perform the method according to the second aspect or any possible implementation of the second aspect.

According to a fifth example, a data transmission device is provided, where the device includes one or more processors, one or more memories, and one or more transceivers (each transceiver includes a transmitter and a receiver). The transmitter or the receiver is connected to one or more antennas, and transmit and receive a signal through an antenna. The memory is configured to store a computer program instruction (namely, code). The processor is configured to execute the instruction stored in the memory. When the instruction is executed, the processor performs the method according to the first aspect or any possible implementation of the first aspect.

According to a sixth example, a data transmission device is provided, where the device includes one or more processors, one or more memories, and one or more transceivers (each transceiver includes a transmitter and a receiver). The transmitter or the receiver is connected to one or more antennas, and transmit and receive a signal through an antenna. The memory is configured to store a computer program instruction (namely, code). The processor is configured to execute the instruction stored in the memory. When the instruction is executed, the processor performs the method according to the second aspect or any possible implementation of the second aspect.

According to a seventh aspect, this application provides a computer-readable storage medium. The computer-readable storage medium stores an instruction, and when the instruction is run on a computer, the computer is enabled to perform the method according to the first aspect or any possible implementation of the first aspect.

According to an eighth aspect, this application provides a computer-readable storage medium. The computer-readable storage medium stores an instruction, and when the instruction is run on a computer, the computer is enabled to perform the method according to the second aspect or any possible implementation of the second aspect.

According to the technical solutions provided in this application, the first device may send the first transport block on the first resource and the second resource, where there is an interval between the first resource and the second resource, to help reduce redundant data transmission. Further, the interval between the first resource and the second resource in time domain is related to at least one of the first set time and the second set time, so that the first device obtains the receiving status of the first transport block, and sends the first transport block on the second resource based on the receiving status of the first transport block, to help improve the probability of successful transmission.

### BRIEF DESCRIPTION OF DRAWINGS

FIG. 1 is a schematic interaction diagram of an example of a data transmission method according to an embodiment of this application;
FIG. 2 is a schematic diagram of an example of resources corresponding to a data transmission method according to an embodiment of this application;
FIG. 3 is a schematic diagram of another example of resources corresponding to a data transmission method according to an embodiment of this application;
FIG. 4 is a schematic diagram of still another example of resources corresponding to a data transmission method according to an embodiment of this application;
FIG. 5 is a schematic diagram of yet another example of resources corresponding to a data transmission method according to an embodiment of this application;
FIG. 6 is a schematic diagram of yet another example of resources corresponding to a data transmission method according to an embodiment of this application;
FIG. 7 is a schematic diagram of an example of a data transmission device according to an embodiment of this application;
FIG. 8 is a schematic diagram of an example of a data transmission device according to an embodiment of this application;
FIG. 9 is a schematic diagram of an example of a data transmission device according to an embodiment of this application; and
FIG. 10 is a schematic diagram of an example of a data transmission device according to an embodiment of this application.

### DESCRIPTION OF EMBODIMENTS

The following describes technical solutions of this application with reference to accompanying drawings.

It should be understood that division of manners, cases, and categories in the embodiments of this application are merely for ease of description, and should not constitute a particular limitation, and features of the manners, categories, and cases may be combined if they are not mutually exclusive.

It should also be understood that "first", "second", and "third" in the embodiments of this application are merely intended to distinguish, and should not constitute any limitation on this application.

In the embodiments of this application, a network device is an apparatus that is deployed in a radio access network and that is used to provide a wireless communication function for a terminal device. The network device may include various forms of base stations, macro base stations, micro base stations (also referred to as small cells), relay stations, access points, and the like. In systems using different radio access technologies, names of devices having functions of a base station may vary. For example, the network device may be an access point (Access Point, AP) in a WLAN, or may be a base transceiver station (Base Transceiver Station, BTS) in a GSM or CDMA, or may be an evolved NodeB (evolved NodeB, eNB or eNodeB) in an LTE system. Alternatively, the network device may further be a Node B (Node B) in a third generation (3rd Generation, 3G) system. Additionally, the network device may further be a relay station, an access point, a vehicle-mounted device, a wearable device, a network device in a future 5G network, a network device in a future evolved PLMN network, or the like. For ease of description, in all the embodiments of this application, all the foregoing apparatuses that provide a wireless communication function for an MS are referred to as network devices.

The terminal device in the embodiments of this application may also be referred to as user equipment (User Equipment, UE), an access terminal, a subscriber unit (subscriber unit), a subscriber station, a mobile console, a mobile station (Mobile Station, MS), a remote station, a remote terminal, a mobile device, a user terminal, a terminal (Terminal), a wireless communications device, a user agent, or a user apparatus.

As an example but not a limitation, the terminal device in the embodiments of this application may include various handheld devices, vehicle-mounted devices, wearable devices, or computing devices that have a wireless communication function, or other processing devices connected to a wireless modem. The terminal device may further include a user unit, a cellular phone (cellular phone), a smart phone (smart phone), a wireless data card, a personal digital assistant (Personal Digital Assistant, PDA) computer, a tablet computer, a wireless modem (modem), a handheld device (handset), a laptop computer (laptop computer), a machine type communication (Machine Type Communication, MTC) terminal, or a station (STAION, ST) in a wireless local area network (Wireless Local Area Networks, WLAN). The terminal device may be a cellular phone, a cordless telephone, a session initiation protocol (Session Initiation Protocol, SIP) telephone, a wireless local loop (Wireless Local Loop, WLL) station, a terminal device in a next generation communications system, for example, a terminal device in a fifth generation (fifth-generation, 5G) communications network or a terminal device in a future evolved public land mobile network (Public Land Mobile Network, PLMN) network, or the like.

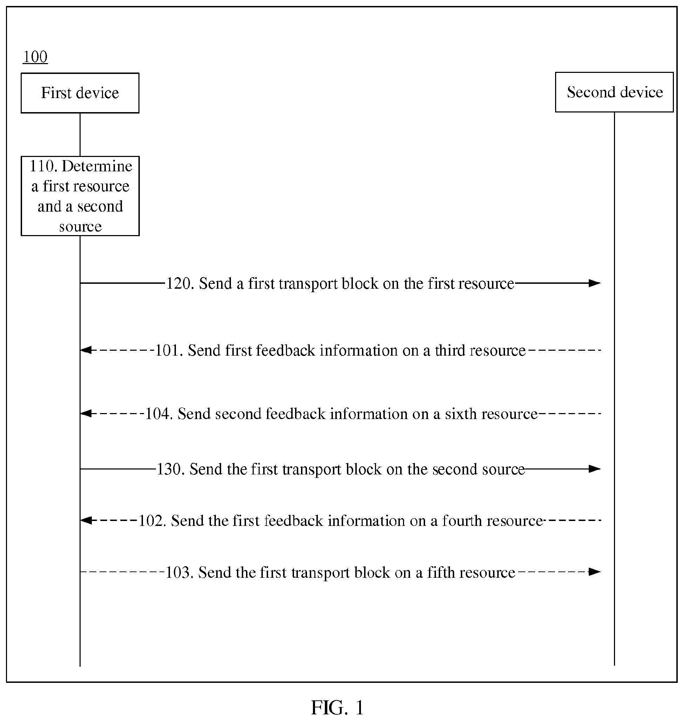

The following describes the data transmission methods in the embodiments of this application in detail with reference to FIG. 1 to FIG. 6.

FIG. 1 is a schematic interaction diagram of an example of a data transmission method 100 according to an embodiment of this application. It should be understood that FIG. 1 shows detailed steps or operations of the data transmission method. However, these steps or operations are merely examples. In this embodiment of this application, other operations or variations of the operations in FIG. 1 may also be performed.

The method 100 may be performed by a first device and a second device. Optionally, in this embodiment of this application, the first device may be a network device, and the second device may be a terminal device. Alternatively, the first device may be a terminal device, and the second device may be a network device.

As shown in FIG. 1, the method 100 may include 110, 120, and 130.

110. The first device determines a first resource and a second resource that are used to send a first transport block, where the first resource and the second resource are discontinuous in time domain.

120. The first device sends the first transport block to a second device on the first resource, and correspondingly, the second device detects the first transport block on the first resource.

The transport block in this embodiment of this application is similar to a transport block (Transport Block, TB) in an LTE system. One transport block may be one data block including a multiple access channel (Multiple Access Channel, MAC) packet data unit (Packet Data Unit, PDU), and the data block may be transmitted at one transmission time interval (Transmission Time Interval, TTI).

It should be understood that a resource (for example, the first resource and the following second resource) in this embodiment of this application may be a TTI or a short transmission time interval (Short Transmission Time Interval, sTTI).

130. The first device sends the first transport block to the second device on the second resource; and correspondingly, a second terminal device detects the first transport block on the second resource.

Compared with the prior art in which the first transport block is repeatedly and blindly transmitted for a plurality of times, there is an interval between the first resource and the second resource, to help reduce redundant data transmission.

Further, after 130, the method may further include:

103. The first device sends the first transport block on at least one fifth resource; and correspondingly, the second device detects the first transport block on the at least one fifth resource.

In other words, the first device may send the first transport block on N (N≥3) resources. Specifically, there may be a plurality of cases for a position relationship of the plurality of resources in time domain.

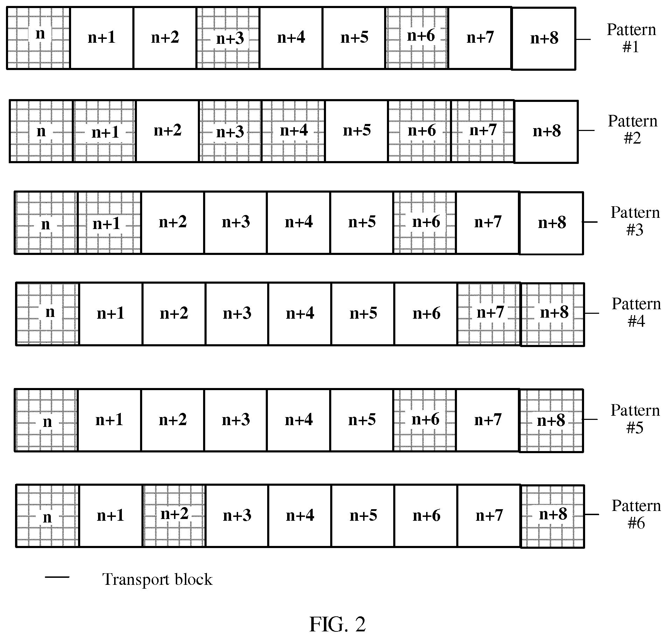

In an optional example, the N resources may be arranged at equal intervals. FIG. 2 is a schematic diagram of an example of resources corresponding to a data transmission method according to an embodiment of this application; For example, in a pattern #1 shown in FIG. 2, the N resources are arranged at equal intervals.

In another optional example, the N resources may be arranged at non-equal intervals. For example, the N resources may be partially continuous and partially discontinuous. Further, resource patterns vary in different cases. For example, the first device or the second device has a relatively high block error rate (Block Error Ratio, BLER), and the first device and the second device need a relatively large quantity of time domain resources to transmit the first transport block. For example, as shown in a pattern #2 in FIG. 2, This structure increases a probability of successful transmission.

For another example, a position relationship of the N resources in time domain may be from dense to sparse, for example, as shown in a pattern #3 in FIG. 2, and this structure helps reduce a transmission delay.

For still another example, the position relationship of the N resources in time domain may be from sparse to dense, for example, as shown in a pattern #4 in FIG. 2, and this structure helps reduce redundant transmission.

In another optional example, any two of the N resources are discontinuous.

For example, the position relationship of the N resources in time domain may be from sparse to dense, and transmission is performed based on the feedback information in the following. For example, as shown in a pattern #5 in FIG. 2, this structure helps reduce redundant transmission.

For another example, the position relationship of the N resources in time domain may be from dense to sparse, and the N resources are transmitted based on the feedback information in the following. For example, as shown in a pattern #6 in FIG. 2, this structure helps reduce redundant transmission.

Further, optionally, an interval between the first resource and the second resource in time domain is related to at least one of a first set time used to send first feedback information and a second set time used to send second feedback information. For ease of description, the "interval between the first resource and the second resource in time domain" may be denoted as a "first interval".

The first set time may be understood as an interval between detecting a signal and detecting feedback information corresponding to the signal in time domain.

For example, the first device sends the first transport block on a resource #A, and the second device may send the first feedback information to the first device based on a detection result of detecting the first transport block on the resource #A, where the first feedback information may be used to indicate that the first transport block is correctly received or is not correctly received. Correspondingly, the first device may receive the first feedback information on a resource #B, and an interval between the resource #A and the resource #B in time domain is the first set time.

The second set time may be understood as an interval between measuring a signal and measuring feedback information corresponding to the signal in time domain.

For example, the first device performs channel measurement on a resource #A, and the second device may send the second feedback information to the first device based on a measurement result on the resource #A. Correspondingly, the first device receives the second feedback information on a resource #B, and an interval between the resource #A and the resource #B in time domain is the second set time.

Optionally, the second resource may be a reserved resource used to send the first transport block. The first device may send the first transport block on the second resource, or the second device may determine, based on some conditions, whether to send the first transport block on the second resource. Details are described subsequently.

In an optional example, the first interval may be related to the second set time. For example, the first interval may be greater than or equal to the second set time.

Optionally, the first device sends the first transport block on the first resource, and the second device may measure channel quality corresponding to the first resource, and send, based on the second set time, the second feedback information used to indicate the channel quality. In other words, before 130, the method may further include:

101. The second device sends the second feedback information to the first device on a third resource; and correspondingly, the first device receives the second feedback information on the third resource, where the interval between the first resource and the second resource in time domain is greater than or equal to an interval between the first resource and the third resource in time domain, and the third resource is determined based on the second set time (it may be considered that the interval between the first resource and the third resource in time domain is equal to the second set time). For ease of description, the "interval between the first resource and the third resource in time domain" may be denoted as a "second interval".

Optionally, the second feedback information may include at least one of a channel quality indicator (Channel Quality Indicator, CQI), a signal to interference plus noise ratio (Signal to Interference plus Noise Ratio, SINR), a signal to interference ratio (Signal to Interference Ratio, SIR), a modulation and coding scheme (Modulation and Coding Scheme, MCS) level, and the like used to indicate channel quality.

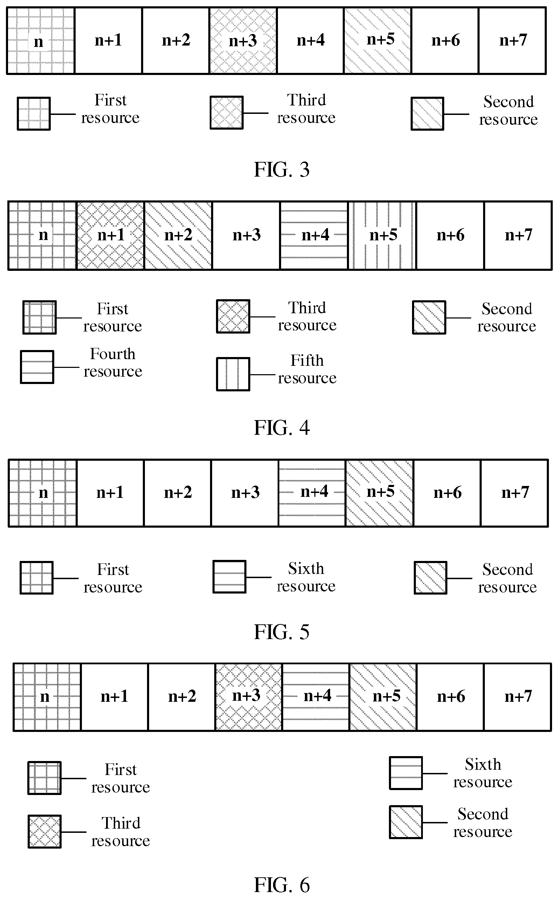

FIG. 3 is a schematic diagram of resources corresponding to a data transmission method according to an embodiment of this application. As shown in FIG. 3, the first interval is greater than or equal to the second interval. In other words, before sending the first transport block on the second resource, the second device may first receive the second feedback information. After the first device receives the second feedback information, 130 may include the following two cases:

### Case #1

The first device sends, based on the second feedback information, the first transport block to the second device on the second resource.

Specifically, the first device may adjust a sending parameter based on the second feedback information, and send the first transport block on the second resource by using the adjusted sending parameter. The sending parameter includes: at least one of a modulation manner, a coding manner, and transmission duration. The first device may adjust the sending parameter based on channel quality, to help improve a probability of successfully sending the first transport block.

### Case #2

The first device determines, based on the second feedback information, whether to send the first transport block on the second resource.

In this case, 130 may include:
If the first device determines, based on the second feedback information, to send the first transport block on the second resource, the first device sends the first transport block on the second resource.

Specifically, the second feedback information can be used to indicate channel quality. If the first device determines, based on the second feedback information, that the channel quality is relatively good, for example, the first device may determine a first threshold based on experience, and if the channel quality is greater than the first threshold, the first device may determine that the first transport block does not need to be sent on the second resource; and if the channel quality is less than the first threshold, the first device determines that the first transport block needs to be sent on the second resource, and sends the first transport block on the second resource.

The first interval is related to the second set time. The first device may first obtain the second feedback information, and performs adjustment or stop sending the first transport block based on the second feedback information, to help improve data transmission reliability.

Further, after 110, the method 100 may further include:
102. The second device sends the first feedback information on a fourth resource; and correspondingly, the first device receives the first feedback information on the fourth resource, where the fourth resource is determined based on the first set time, and the first feedback information may be specifically used to indicate that the first transport block is not correctly received.

After 130, the method 100 may further include:
103. The first device sends the first transport block to the second device on a fifth resource; and correspondingly, the second device detects the first transport block on the fifth resource, where an interval between the first resource and the fifth resource in time domain is greater than or equal to an interval between the first resource and the fourth resource in time domain.

Optionally, the interval between the first resource and the second resource in time domain may be less than the interval between the first resource and the fourth resource in time domain. Further, the interval between the first resource and the fourth resource in time domain may be less than the interval between the first resource and the fifth resource in time domain. The first device may send the first transport block based on the first feedback information.

FIG. 4 is a schematic diagram of resources corresponding to a data transmission method according to an embodiment of this application. As shown in FIG. 4, the first device may send the first transport block on the second resource. Further, the first device may send the first transport block on the second resource based on the second feedback information received on the third resource. The first device receives the first feedback information on the fourth resource (the first feedback information is specifically used to indicate that the first transport block is not correctly received), and the first device may send the first transport block on the fifth resource. This solution may reduce redundant data transmission, and help improve data transmission reliability.

It should be understood that, in this embodiment of this application, the first device may send the first transport block for a plurality of times. Further, the first device may send the first transport block at equal intervals or at non-equal intervals. (In other words, the first device may send the first transport block for a plurality of times, and intervals between two adjacent times of sending the first transport block may be different in time domain). For example, as shown in FIG. 4, an interval between sending the first transport block on the first resource by the first device and sending the first transport block on the second resource by the first device in time domain is one resource unit (TTI), an interval between sending the first transport block on the second resource by the first device and sending the second transport block on the fifth resource by the first device in time domain is two resource units.

In another optional example, the first interval may be related to the first set time. For example, the first interval may be greater than or equal to the first set time.

Specifically, in this embodiment of this application, the first feedback information may be fed back in the following three manners:
1. A NACK is fed back and an ACK is not fed back. The first feedback information is specifically used to indicate that the first transport block is not correctly received. In other words, if the second device fails to receive the first transport block, the second device feeds back a NACK; or if the second device successfully receives the first transport block, the second device does not send the first feedback information.

Optionally, the first device sends the first transport block on the first resource, and correspondingly, the second device detects the first transport block on the first resource, and if the second device detects that the first transport block is not successfully received, before 130, the method may further include:
104. The second device sends the first feedback information to the first device on a sixth resource; and correspondingly, the first device receives the first feedback information on the sixth resource, where the interval between the first resource and the second resource in time domain is greater than or equal to the interval between the first resource and the third resource in time domain, and the third resource is determined based on the second set time (it may be considered that the interval between the first resource and the third resource in time domain is equal to the second set time). For ease of description, the "interval between the first resource and the third resource in time domain" may be denoted as a "second interval".
130 may include:

If the first device receives the first feedback information on the sixth resource, the first device sends the first transport block on the second resource. FIG. 5 is a schematic diagram of resources corresponding to a data transmission method according to an embodiment of this application. As shown in FIG. 5, before the first device sends the first transport block on the second resource, if the first device receives a NACK on the sixth resource, the first device may determine that the first transport block is not successfully transmitted and send the first transport block on the second resource.

2. An ACK is fed back and a NACK is not fed back. That is, the first feedback information is specifically used to indicate that the first transport block is correctly received. In other words, if the second device successfully receives the first transport block, the second device feeds back an ACK; or if the second device fails to receive the first transport block, the second device does not send the first feedback information.

In this case, 130 may include:
If the first device does not receive the first feedback information on the sixth resource, the first device sends the first transport block on the second resource. For related descriptions of the sixth resource, refer to the foregoing related descriptions. If the first device does not receive the first feedback information on the sixth resource, the first device may determine that the first transport block is not successfully sent, and further send the first transport block on the second resource. If the first device receives the first feedback information on the sixth resource, the first device may stop sending the first transport block.

3. An ACK is fed back and a NACK is fed back.

In this case, 130 may include:
If the first device receives a NACK on the sixth resource, the first device sends the first transport block on the second resource. Correspondingly, if the first device receives an ACK on the sixth resource, the first device skips sending the first transport block on the second resource. For details, refer to the foregoing related descriptions. For brevity, details are not described herein.

In still another optional example, the interval between the first resource and the second resource in time domain is related to the first set time used to send the first feedback information and the second set time used to send the second feedback information. For example, the first interval may be greater than or equal to the first set time and greater than or equal to the second set time.

FIG. 6 is a schematic diagram of resources corresponding to a data transmission method according to an embodiment of this application. As shown in FIG. 6, the first device receives the second feedback information on the third resource, the first device receives the first feedback information on the sixth resource (the first feedback information is specifically used to indicate that the first transport block is not correctly received), and the first device sends the first transport block on the second resource.

As described above, after sending the first transport block on the first resource, the first device may send the first transport block on the second resource. Correspondingly, the second device detects the first transport block on the first resource, and detects the first transport block on the second resource.

Further, if the first device is a network device, and the second device is a terminal device, the terminal device may determine the first resource and/or the second resource in a plurality of manners. For example, the method 100 may include:
The network device may send scheduling grant signaling to the terminal device, where the scheduling grant signaling indicates the first resource and the second resource. Correspondingly, the terminal device may receive the scheduling grant signaling sent by the network device.

Optionally, the scheduling grant signaling may include at least one of the first set time and the second set time, and the scheduling grant signaling indicates the second resource by using the at least one of the first set time and the second set time.

In an optional example, the network device may send the scheduling grant signaling by using the first resource; and correspondingly, the terminal device may receive the scheduling grant signaling by using the first resource, and after receiving the scheduling grant signaling, the terminal device may determine that a resource corresponding to the scheduling grant signaling is the first resource.

If the scheduling grant signaling includes at least one of the first set time and the second set time, the terminal device may determine the second resource based on the first resource and the at least one of the first set time and the second set time.

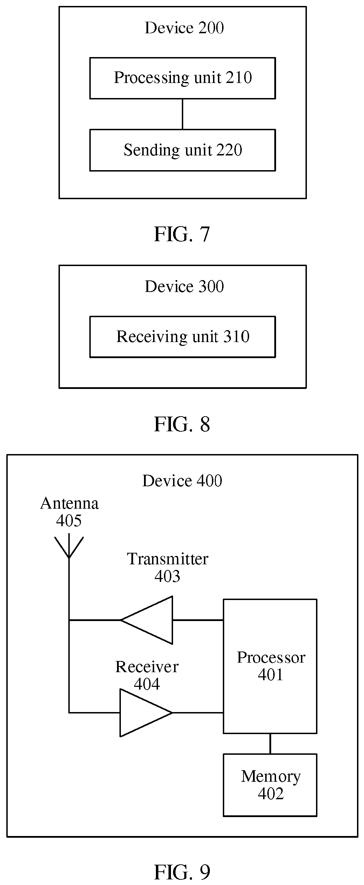

The foregoing describes the data transmission method according to the embodiments of this application with reference to FIG. 2 to FIG. 6, and the following describes a data transmission device according to the embodiments of this application with reference to FIG. 7 to FIG. 10.

FIG. 7 is a schematic diagram of an example of a data transmission device according to an embodiment of this application. As shown in FIG. 7, the device 200 includes:
a processing unit 210, configured to determine a first resource and a second resource that are used to send a first transport block, where the first resource and the second resource are discontinuous in time domain; and
a sending unit 220, where the sending unit 220 is configured to:
   send the first transport block to a second device on the first resource; and
   send the first transport block to the second device on the second resource.

Optionally, an interval between the first resource and the second resource in time domain is related to at least one of a first set time used to send first feedback information and a second set time used to send second feedback information, where the first feedback information is used to indicate that the first transport block is correctly received or is not correctly received, and the second feedback information is used to indicate channel quality.

Optionally, the device further includes:
a receiving unit, configured to receive the second feedback information on a third resource, where the interval between the first resource and the second resource in time domain is greater than or equal to an interval between the first resource and the third resource in time domain, and the third resource is determined based on the second set time.

Optionally, the device further includes:
the receiving unit, configured to receive the first feedback information on a fourth resource, where the fourth resource is determined based on the first set time; and
after the sending the first transport block to the second device on the second resource, the device further includes:
   sending the first transport block to the second device on a fifth resource, where an interval between the first resource and the fifth resource in time domain is greater than or equal to an interval between the first resource and the fourth resource in time domain.

Optionally, the device further includes:
a receiving unit, configured to receive the first feedback information on a sixth resource, where the interval between the first resource and the second resource in time domain is greater than or equal to an interval between the first resource and the sixth resource in time domain, and the sixth resource is determined based on the first set time.

Optionally, the sending unit 220 is further configured to: send the first transport block to the second device on the fifth resource, where the interval between the first resource and the second resource in time domain is different from an interval between the second resource and the third resource.

Optionally, the first device is a network device, the second device is a terminal device, and before the first device sends the first transport block to the second device on the first resource, the sending unit 220 is further configured to: send scheduling grant signaling to the terminal device, where the scheduling grant signaling indicates the first resource and the second resource.

Optionally, the first device is a terminal device, the second device is a network device, and the device further includes: the receiving unit, configured to receive scheduling grant signaling sent by the network device, where the scheduling grant signaling indicates the first resource and the second resource.

The processing unit 210 is specifically configured to: determine the second resource based on the scheduling grant signaling and the first resource.

Optionally, the scheduling grant signaling includes: at least one of the first set time and the second set time, where the scheduling grant signaling indicates the second resource by using the at least one of the first set time and the second set time.

Units in the device 200 provided in this application and the foregoing other operations or functions are separately used for implementing a corresponding procedure performed by the first device in the method 100 provided in this application. For brevity, details are not described herein again.

FIG. 8 is a schematic diagram of an example of a data transmission device according to an embodiment of this application. As shown in FIG. 8, the device 300 includes:
a receiving unit 310, where the receiving unit 310 is configured to:
detect, by a second device on a first resource, a first transport block sent by a first device; and
detect, on a second resource, the first transport block sent by the first device, where the first resource and the second resource are discontinuous in time domain.

Optionally, an interval between the first resource and the second resource in time domain is related to at least one of a first set time used to send first feedback information and a second set time used to send second feedback information, where the first feedback information is used to indicate that the first transport block is correctly received or is not correctly received, and the second feedback information is used to indicate channel quality.

Optionally, the device further includes:
a sending unit, configured to send the second feedback information to the first device on a third resource, where the interval between the first resource and the second resource in time domain is greater than or equal to an interval between the first resource and the third resource in time domain, and the third resource is determined based on the second set time.

Optionally, the device further includes:
the sending unit, configured to send the first feedback information to the first device on a fourth resource, where the fourth resource is determined based on the first set time; and
the receiving unit 310, further configured to: detect the first transport block on a fifth resource, where an interval between the first resource and the fifth resource in time domain is greater than or equal to an interval between the first resource and the fourth resource in time domain.

Optionally, the sending unit is further configured to send the first feedback information to the first device on a sixth resource, where the interval between the first resource and the second resource in time domain is greater than or equal to an interval between the first resource and the sixth resource in time domain, and the sixth resource is determined based on the first set time.

Optionally, the sending unit is further configured to: detect the first transport block on the fifth resource, where the interval between the first resource and the second resource in time domain is different from an interval between the second resource and the third resource.

Optionally, the first device is a network device, the second device is a terminal device, and before the second device detects, on the first resource, the first transport block sent by the first device, the device further includes:
the receiving unit 310, configured to receive scheduling grant signaling sent by the network device, where the scheduling grant signaling indicates the first resource and the second resource; and
a processing unit, configured to determine the second resource based on the scheduling grant signaling.

Optionally, the first device is a terminal device, the second device is a network device, and the device further includes:
the sending unit, configured to send scheduling grant signaling to the terminal device, where the scheduling grant signaling indicates the first resource and the second resource.

Optionally, the scheduling grant signaling includes: at least one of the first set time and the second set time, where the scheduling grant signaling indicates the second resource by using the at least one of the first set time and the second set time.

Units in the device 300 provided in this application and the foregoing other operations or functions are separately used for implementing a corresponding procedure performed by the second device in the method 100 provided in this application. For brevity, details are not described herein again.

FIG. 9 is a schematic diagram of an example of a data transmission device according to an embodiment of this application. As shown in FIG. 9, the device 400 includes: one or more processors 401, one or more memories 402, and one or more transceivers (each transceiver includes a transmitter 403 and a receiver 404). The transmitter 403 or the receiver 404 is connected to one or more antennas 405, and transmit and receive a signal through the antenna. The memory 402 stores a computer program instruction (namely, code). The processor 401 executes the computer program instruction stored in the memory 402, to implement a corresponding procedure and/or operation that are/is performed by the first device in the communication method 100 provided in the embodiments of this application. Details are not described herein again.

It should be noted that the device 200 shown in FIG. 7 may be implemented by the device 400 shown in FIG. 9. For example, the processing unit 220 shown in FIG. 7 may be implemented by the processor 401. The sending unit 210 may be specifically implemented by the transmitter 403, and the receiving unit may be specifically implemented by the receiver 404.

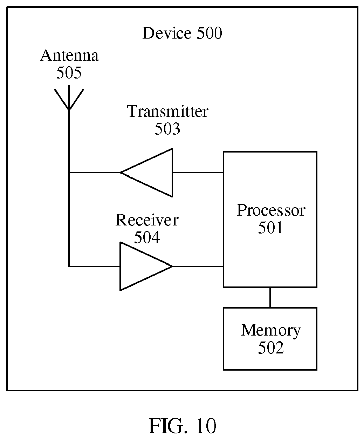

FIG. 10 is a schematic diagram of an example of a data transmission device according to an embodiment of this application. As shown in FIG. 10, the device 500 includes: one or more processors 501, one or more memories 502, and one or more transceivers (each transceiver includes a transmitter 503 and a receiver 504). The transmitter 503 or the receiver 504 is connected to one or more antennas 505, and transmit and receive a signal through the antenna. The memory 502 stores a computer program instruction (namely, code). The processor 501 executes the computer program instruction stored in the memory 502, to implement a corresponding procedure and/or operation that are/is performed by the second device in the communication method 100 provided in the embodiments of this application. Details are not described herein again.

It should be noted that the device 300 shown in FIG. 8 may be implemented by the device 500 shown in FIG. 10. For example, the processing unit shown in FIG. 3 may be implemented by the processor 501. The receiving unit 310 may be specifically implemented by the transmitter 503. The sending unit may be specifically implemented by the receiver 505.

In the foregoing embodiments, the processor may be a central processing unit (Central Processing Unit, CPU), a microprocessor, an application-specific integrated circuit (Application-Specific Integrated Circuit, ASIC), one or more integrated circuits configured to control execution of programs of the solutions of this application, and the like. For example, the processor may include a digital signal processor device, a microprocessor device, an analog-to-digital converter, and a digital-to-analog converter. The processor may allocate control and signal processing functions of mobile devices between these devices based on respective functions of the devices. In addition, the processor may include functions for operating one or more software programs, and the software programs may be stored in a memory.

The memory may be a read-only memory (Read Only Memory, ROM) or another type of static storage device that is capable of storing static information and a static instruction, a random access memory (Random Access Memory, RAM) or another type of dynamic storage device that is capable of storing information and an instruction. The memory may alternatively be an electrically erasable programmable read-only memory (Electrically Erasable Programmable Read-Only Memory, EEPROM), a compact disc read-only memory (Compact Disc Read-Only Memory, CD-ROM), or another compact disc storage, optical disc storage (which includes a compact disc, a laser disc, an optical disc, a digital versatile disc, a Blu-ray disc, and the like), a magnetic disk storage medium or another magnetic storage device, or any other medium that can be used to carry or store expected program code having an instruction or a data structure form and that can be accessed by a computer. However, this is not limited herein. The memory may exist alone, or may be integrated into the processor.

The transceiver may include, for example, an infrared transceiver, an RF transceiver, a wireless universal serial bus (Universal Serial Bus, USB) transceiver, a Bluetooth transceiver. Although not shown, the first device may use a corresponding communications technology to transmit information (or a signal) by using the transmitter, and/or receive information (a signal) by using the receiver.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separated, and parts displayed as units may be or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit 320, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in the claims shall fall within the protection scope of this application. Therefore, the protection scope of this application shall be subject to the protection scope of the claims.

## Claims

1. A data transmission method (100) of a first device (200), wherein the method comprises:
determining (110) a first resource and a second resource that are used to send a first transport block, wherein the first resource and the second resource are discontinuous in time domain;
sending (120) the first transport block to a second device (300) on the first resource; and
sending (130) the first transport block to the second device on the second resource, wherein an interval between the first resource and the second resource in time domain is related to at least one of a first set time used to send first feedback information and a second set time used to send second feedback information,
wherein the first feedback information is used to indicate that the first transport block is correctly received or is not correctly received, and the second feedback information is used to indicate channel quality, wherein before the sending (130) the first transport block to the second device on the second resource, the method further comprises:
receiving the second feedback information on a third resource, wherein the interval between the first resource and the second resource in time domain is greater than or equal to an interval between the first resource and the third resource in time domain, and the third resource is determined based on the second set time; and
wherein the second feedback information includes at least one of a channel quality indicator, CQI, a signal to interference plus noise ratio, SINR, a signal to interference ratio, SIR, and a modulation and coding scheme level, MCS level;
**characterized in that**
the method further comprises:
adjusting a sending parameter based on the second feedback information, wherein the sending parameter includes at least one of a modulation manner, a coding manner, and transmission duration; and
sending the first transport block on the second resource by using the adjusted sending parameter;
the second set time is an interval between measuring a signal and measuring feedback information corresponding to the signal in time domain; and
the interval between the first resource and the third resource in time domain is equal to the second set time.

2. The method according to claim 1, wherein the second resource is a reserved resource used to send the first transport block.

3. The method according to claim 1 or 2, wherein after the sending the first transport block to a second device on the first resource, the method further comprises:
receiving the first feedback information on a fourth resource, wherein the fourth resource is determined based on the first set time; and
after the sending the first transport block to the second device on the second resource, the method further comprises:
sending the first transport block to the second device on a fifth resource, wherein an interval between the first resource and the fifth resource in time domain is greater than or equal to an interval between the first resource and the fourth resource in time domain.

4. The method according to claim 3, wherein the interval between the first resource and the fifth resource and the interval between the first resource and the second resource are equal or, if they are not equal, are partially continuous and partially discontinuous or discontinuous, in particular with a position relationship of the different resources in time from dense to sparse or from sparse to dense.

5. The method according to claim 1, wherein before the sending the first transport block to the second device on the second resource, the method further comprises:
receiving the first feedback information on a sixth resource, wherein the interval between the first resource and the second resource in time domain is greater than or equal to an interval between the first resource and the sixth resource in time domain, and the sixth resource is determined based on the first set time.

6. The method according to any one of claims 1 to 5, wherein the method further comprises:
sending the first transport block to the second device on the fifth resource, wherein the interval between the first resource and the second resource in time domain is different from an interval between the second resource and the third resource.

7. A data transmission method (100) of a second device (300), wherein the method comprises:
detecting, on a first resource, a first transport block sent by a first device (200) ; and
detecting, on a second resource, the first transport block sent by the first device (200), wherein the first resource and the second resource are discontinuous in time domain, wherein an interval between the first resource and the second resource in time domain is related to at least one of a first set time used to send first feedback information and a second set time used to send second feedback information,
wherein the first feedback information is used to indicate that the first transport block is correctly received or is not correctly received, and the second feedback information is used to indicate channel quality, wherein before the detecting, on a second resource, the first transport block sent by the first device, the method further comprises:
sending (101) the second feedback information to the first device (200) on a third resource, wherein the interval between the first resource and the second resource in time domain is greater than or equal to an interval between the first resource and the third resource in time domain, and the third resource is determined based on the second set time; and
wherein the second feedback information includes at least one of a channel quality indicator, CQI, a signal to interference plus noise ratio, SINR, a signal to interference ratio, SIR, and a modulation and coding scheme level, MCS level;
**characterized in that** the second feedback information is used to adjust a sending parameter for sending the first transport block on the second resource, wherein the sending parameter includes at least one of a modulation manner, a coding manner, and transmission duration;
the second set time is an interval between measuring a signal and measuring feedback information corresponding to the signal in time domain; and
the interval between the first resource and the third resource in time domain is equal to the second set time.

8. The method according to claim 7, wherein the second resource is a reserved resource used to send the first transport block.

9. The method according to claim 7 or 8, wherein after the detecting, on a first resource, a first transport block sent by a first device, the method further comprises:
sending the first feedback information to the first device on a fourth resource, wherein the fourth resource is determined based on the first set time; and
after the detecting, on a second resource, the first transport block sent by the first device, the method further comprises:
detecting the first transport block on a fifth resource, wherein an interval between the first resource and the fifth resource in time domain is greater than or equal to an interval between the first resource and the fourth resource in time domain.

10. The method according to claim 7, wherein before the detecting, on a second resource, the first transport block sent by the first device, the method further comprises:
sending the first feedback information to the first device on a sixth resource, wherein the interval between the first resource and the second resource in time domain is greater than or equal to an interval between the first resource and the sixth resource in time domain, and the sixth resource is determined based on the first set time.

11. A data transmission device (200), wherein the device is a first device, and the device comprises:
a processing unit (210), configured to determine (110) a first resource and a second resource that are used to send a first transport block, wherein the first resource and the second resource are discontinuous in time domain; and
a sending unit (220), wherein the sending unit is configured to:
send (120) the first transport block to a second device on the first resource; and
send (130) the first transport block to the second device on the second resource, wherein an interval between the first resource and the second resource in time domain is related to at least one of a first set time used to send first feedback information and a second set time used to send second feedback information,
wherein the first feedback information is used to indicate that the first transport block is correctly received or is not correctly received, and the second feedback information is used to indicate channel quality, wherein the data transmission device is configured to, before the sending the first transport block to the second device on the second resource, further:
receive the second feedback information on a third resource, wherein the interval between the first resource and the second resource in time domain is greater than or equal to an interval between the first resource and the third resource in time domain, and the third resource is determined based on the second set time; and
wherein the second feedback information includes at least one of a channel quality indicator, CQI, a signal to interference plus noise ratio, SINR, a signal to interference ratio, SIR, and a modulation and coding scheme level, MCS level;
**characterized in that**
the data transmission device is configured to:
adjust a sending parameter based on the second feedback information, wherein the sending parameter includes at least one of a modulation manner, a coding manner, and transmission duration; and
send the first transport block on the second resource by using the adjusted sending parameter;
the second set time is an interval between measuring a signal and measuring feedback information corresponding to the signal in time domain; and
the interval between the first resource and the third resource in time domain is equal to the second set time.

12. A data transmission device (300), wherein the device comprises: a receiving unit (310), wherein the receiving unit is configured to:
detect, by a second device on a first resource, a first transport block sent by a first device; and
detecting, on a second resource, the first transport block sent by the first device, wherein the first resource and the second resource are discontinuous in time domain, wherein an interval between the first resource and the second resource in time domain is related to at least one of a first set time used to send first feedback information and a second set time used to send second feedback information,
wherein the first feedback information is used to indicate that the first transport block is correctly received or is not correctly received, and the second feedback information is used to indicate channel quality, wherein the data transmission device is configured to, before the detecting, on a second resource, the first transport block sent by the first device, further:
send the second feedback information to the first device on a third resource, wherein the interval between the first resource and the second resource in time domain is greater than or equal to an interval between the first resource and the third resource in time domain, and the third resource is determined based on the second set time; and
wherein the second feedback information includes at least one of a channel quality indicator, CQI, a signal to interference plus noise ratio, SINR, a signal to interference ratio, SIR, and a modulation and coding scheme level, MCS level;
**characterized in that** the second feedback information is used to adjust a sending parameter for sending the first transport block on the second resource, wherein the sending parameter includes at least one of a modulation manner, a coding manner, and transmission duration;
the second set time is an interval between measuring a signal and measuring feedback information corresponding to the signal in time domain; and
the interval between the first resource and the third resource in time domain is equal to the second set time.

13. A computer readable storage medium, wherein the computer readable storage medium stores an instruction, and when the instruction is run on a computer, the computer is enabled to perform steps in the methods according to any one of claims 1 to 10.

14. A computer program product comprising an instruction, wherein when the instruction is run on a computer, the computer is enabled to perform steps in the methods according to any one of claims 1 to 10.

## Patentansprüche

1. Datenübertragungsverfahren (100) einer ersten Vorrichtung (200), wobei das Verfahren Folgendes umfasst:
Bestimmen (110) einer ersten Ressource und einer zweiten Ressource, die zum Senden eines ersten Transportblocks verwendet werden, wobei die erste Ressource und die zweite Ressource in einer Zeitdomäne diskontinuierlich sind;
Senden (120) des ersten Transportblocks an eine zweite Vorrichtung (300) auf der ersten Ressource; und
Senden (130) des ersten Transportblocks an die zweite Vorrichtung auf der zweiten Ressource, wobei ein Intervall zwischen der ersten Ressource und der zweiten Ressource in der Zeitdomäne mit mindestens einer aus einer ersten festgelegten Zeit, die zum Senden erster Feedbackinformationen verwendet wird, und einer zweiten festgelegten Zeit, die zum Senden zweiter Feedbackinformationen verwendet wird, in Beziehung steht,
wobei die ersten Feedbackinformationen dazu verwendet werden, anzugeben, dass der erste Transportblock korrekt empfangen wird oder nicht korrekt empfangen wird, und die zweiten Feedbackinformationen verwendet werden, um eine Kanalqualität anzugeben, wobei das Verfahren vor dem Senden (130) des ersten Transportblocks an die zweite Vorrichtung auf der zweiten Ressource ferner Folgendes umfasst:
Empfangen der zweiten Feedbackinformationen auf einer dritten Ressource, wobei das Intervall zwischen der ersten Ressource und der zweiten Ressource in der Zeitdomäne größer oder gleich einem Intervall zwischen der ersten Ressource und der dritten Ressource in der Zeitdomäne ist und die dritte Ressource basierend auf der zweiten festgelegten Zeit bestimmt wird; und wobei die zweiten Feedbackinformationen mindestens eines aus einem Kanalqualitätsindikator, CQI, einem Signal-zu-Interferenz-plus-Rausch-Verhältnis, SINR, einem Signal-zu-Interferenz-Verhältnis, SIR, und einem Modulations- und Kodierungsschema-Niveau, MCS-Niveau, beinhalten;
**dadurch gekennzeichnet, dass**
das Verfahren ferner Folgendes umfasst:
Anpassen eines Sendeparameters basierend auf den zweiten Feedbackinformationen, wobei der Sendeparameter mindestens eine aus einer Modulationsart, einer Kodierungsart und einer Übertragungsdauer beinhaltet; und
Senden des ersten Transportblocks auf der zweiten Ressource unter Verwendung des angepassten Sendeparameters;
die zweite festgelegte Zeit ein Intervall zwischen einem Messen eines Signals und einem Messen von Feedbackinformationen ist, die dem Signal in der Zeitdomäne entsprechen; und
das Intervall zwischen der ersten Ressource und der dritten Ressource in der Zeitdomäne der zweiten festgelegten Zeit entspricht.

2. Verfahren nach Anspruch 1, wobei die zweite Ressource eine reservierte Ressource ist, die dazu verwendet wird, den ersten Transportblock zu senden.

3. Verfahren nach Anspruch 1 oder 2, wobei das Verfahren nach dem Senden des ersten Transportblocks an eine zweite Vorrichtung auf der ersten Ressource ferner Folgendes umfasst:
Empfangen der ersten Feedbackinformationen auf einer vierten Ressource, wobei die vierte Ressource basierend auf der ersten festgelegten Zeit bestimmt wird; und
das Verfahren nach dem Senden des ersten Transportblocks an die zweite Vorrichtung auf der zweiten Ressource ferner Folgendes umfasst:
Senden des ersten Transportblocks an die zweite Vorrichtung auf einer fünften Ressource, wobei ein Intervall zwischen der ersten Ressource und der fünften Ressource in der Zeitdomäne größer oder gleich einem Intervall zwischen der ersten Ressource und der vierten Ressource in der Zeitdomäne ist.

4. Verfahren nach Anspruch 3, wobei das Intervall zwischen der ersten Ressource und der fünften Ressource und das Intervall zwischen der ersten Ressource und der zweiten Ressource gleich sind oder, sofern sie nicht gleich sind, teilweise kontinuierlich und teilweise diskontinuierlich oder diskontinuierlich sind, insbesondere mit einer Positionsbeziehung der verschiedenen Ressourcen in der Zeit von dicht zu verstreut oder von verstreut zu dicht.

5. Verfahren nach Anspruch 1, wobei das Verfahren vor dem Senden des ersten Transportblocks an die zweite Vorrichtung auf der zweiten Ressource ferner Folgendes umfasst:
Empfangen der ersten Feedbackinformationen auf einer sechsten Ressource, wobei das Intervall zwischen der ersten Ressource und der zweiten Ressource in der Zeitdomäne größer oder gleich einem Intervall zwischen der ersten Ressource und der sechsten Ressource in der Zeitdomäne ist und die sechste Ressource basierend auf der ersten festgelegten Zeit bestimmt wird.

6. Verfahren nach einem der Ansprüche 1 bis 5, wobei das Verfahren ferner Folgendes umfasst:
Senden des ersten Transportblocks an die zweite Vorrichtung auf der fünften Ressource, wobei sich das Intervall zwischen der ersten Ressource und der zweiten Ressource in der Zeitdomäne von einem Intervall zwischen der zweiten Ressource und der dritten Ressource unterscheidet.

7. Datenübertragungsverfahren (100) einer zweiten Vorrichtung (300), wobei das Verfahren Folgendes umfasst:
Erkennen, auf einer ersten Ressource, eines ersten Transportblocks, der durch eine erste Vorrichtung (200) gesendet wird; und
Erkennen, auf einer zweiten Ressource, des ersten Transportblocks, der durch die erste Vorrichtung (200) gesendet wird, wobei die erste Ressource und die zweite Ressource in der Zeitdomäne diskontinuierlich sind, wobei ein Intervall zwischen der ersten Ressource und der zweiten Ressource in der Zeitdomäne mit mindestens einer aus einer ersten festgelegten Zeit, die zum Senden erster Feedbackinformationen verwendet wird, und einer zweiten festgelegten Zeit, die zum Senden zweiter Feedbackinformationen verwendet wird, in Beziehung steht,
wobei die ersten Feedbackinformationen dazu verwendet werden, anzugeben, dass der erste Transportblock korrekt empfangen wird oder nicht korrekt empfangen wird, und die zweiten Feedbackinformationen dazu verwendet werden, eine Kanalqualität anzugeben, wobei das Verfahren vor dem Erkennen, auf einer zweiten Ressource, des ersten Transportblocks, der durch die erste Vorrichtung gesendet wird, ferner Folgendes umfasst:
Senden (101) der zweiten Feedbackinformationen an die erste Vorrichtung (200) auf einer dritten Ressource, wobei das Intervall zwischen der ersten Ressource und der zweiten Ressource in der Zeitdomäne größer oder gleich einem Intervall zwischen der ersten Ressource und der dritten Ressource in der Zeitdomäne ist und die dritte Ressource basierend auf der zweiten festgelegten Zeit bestimmt wird; und
wobei die zweiten Feedbackinformationen mindestens eines aus einem Kanalqualitätsindikator, CQI, einem Signal-zu-Interferenz-plus-Rausch-Verhältnis, SINR, einem Signal-zu-Interferenz-Verhältnis, SIR, und einem Modulations- und Kodierungsschema-Niveau, MCS-Niveau, beinhalten;
**dadurch gekennzeichnet, dass** die zweiten Feedbackinformationen dazu verwendet werden, einen Sendeparameter zum Senden des ersten Transportblocks auf der zweiten Ressource anzupassen, wobei der Sendeparameter mindestens eine aus einer Modulationsart, einer Kodierungsart und einer Übertragungsdauer beinhaltet;
die zweite festgelegte Zeit ein Intervall zwischen einem Messen eines Signals und einem Messen von Feedbackinformationen ist, die dem Signal in der Zeitdomäne entsprechen; und
das Intervall zwischen der ersten Ressource und der dritten Ressource in der Zeitdomäne der zweiten festgelegten Zeit entspricht.

8. Verfahren nach Anspruch 7, wobei die zweite Ressource eine reservierte Ressource ist, die dazu verwendet wird, den ersten Transportblock zu senden.

9. Verfahren nach Anspruch 7 oder 8, wobei das Verfahren nach dem Erkennen, auf einer ersten Ressource, eines ersten Transportblocks, der durch eine erste Vorrichtung gesendet wird, ferner Folgendes umfasst:
Senden der ersten Feedbackinformationen an die erste Vorrichtung auf einer vierten Ressource, wobei die vierte Ressource basierend auf der ersten festgelegten Zeit bestimmt wird; und
das Verfahren, nach dem Erkennen, auf einer zweiten Ressource, des ersten Transportblocks, der durch die erste Vorrichtung gesendet wird, ferner Folgendes umfasst:
Erkennen des ersten Transportblocks auf einer fünften Ressource, wobei ein Intervall zwischen der ersten Ressource und der fünften Ressource in der Zeitdomäne größer oder gleich einem Intervall zwischen der ersten Ressource und der vierten Ressource in der Zeitdomäne ist.

10. Verfahren nach Anspruch 7, wobei das Verfahren vor dem Erkennen, auf einer zweiten Ressource, des ersten Transportblocks, der durch die erste Vorrichtung gesendet wird, ferner Folgendes umfasst:
Senden der ersten Feedbackinformationen an die erste Vorrichtung auf einer sechsten Ressource, wobei das Intervall zwischen der ersten Ressource und der zweiten Ressource in der Zeitdomäne größer oder gleich einem Intervall zwischen der ersten Ressource und der sechsten Ressource in der Zeitdomäne ist und die sechste Ressource basierend auf der ersten festgelegten Zeit bestimmt wird.

11. Datenübertragungsvorrichtung (200), wobei die Vorrichtung eine erste Vorrichtung ist und die Vorrichtung Folgendes umfasst:
eine Verarbeitungseinheit (210), die dazu konfiguriert ist, eine erste Ressource und eine zweite Ressource, die zum Senden eines ersten Transportblocks verwendet werden, zu bestimmen (110), wobei die erste Ressource und die zweite Ressource in der Zeitdomäne diskontinuierlich sind; und
eine Sendeeinheit (220), wobei die Sendeeinheit zu Folgendem konfiguriert ist:
Senden (120) des ersten Transportblocks an eine zweite Vorrichtung auf der ersten Ressource; und
Senden (130) des ersten Transportblocks an die zweite Vorrichtung auf der zweiten Ressource, wobei ein Intervall zwischen der ersten Ressource und der zweiten Ressource in der Zeitdomäne mit mindestens einer aus einer ersten festgelegten Zeit, die zum Senden erster Feedbackinformationen verwendet wird, und einer zweiten festgelegten Zeit, die zum Senden zweiter Feedbackinformationen verwendet wird, in Beziehung steht,
wobei die ersten Feedbackinformationen dazu verwendet werden, anzugeben, dass der erste Transportblock korrekt empfangen wird oder nicht korrekt empfangen wird, und die zweiten Feedbackinformationen dazu verwendet werden, eine Kanalqualität anzugeben, wobei die Datenübertragungsvorrichtung vor dem Senden des ersten Transportblocks an die zweite Vorrichtung auf der zweiten Ressource ferner zu Folgendem konfiguriert ist:
Empfangen der zweiten Feedbackinformationen auf einer dritten Ressource, wobei das Intervall zwischen der ersten Ressource und der zweiten Ressource in der Zeitdomäne größer oder gleich einem Intervall zwischen der ersten Ressource und der dritten Ressource in der Zeitdomäne ist und die dritte Ressource basierend auf der zweiten festgelegten Zeit bestimmt wird; und
wobei die zweiten Feedbackinformationen mindestens eines aus einem Kanalqualitätsindikator, CQI, einem Signal-zu-Interferenz-plus-Rausch-Verhältnis, SINR, einem Signal-zu-Interferenz-Verhältnis, SIR, und einem Modulations- und Kodierungsschema-Niveau, MCS-Niveau, beinhalten;
**dadurch gekennzeichnet, dass**
die Datenübertragungsvorrichtung zu Folgendem konfiguriert ist:
Anpassen eines Sendeparameters basierend auf den zweiten Feedbackinformationen, wobei der Sendeparameter mindestens eine aus einer Modulationsart, einer Kodierungsart und einer Übertragungsdauer beinhaltet; und
Senden des ersten Transportblocks auf der zweiten Ressource unter Verwendung des angepassten Sendeparameters;
die zweite festgelegte Zeit ein Intervall zwischen einem Messen eines Signals und einem Messen von Feedbackinformationen ist, die dem Signal in der Zeitdomäne entsprechen; und
das Intervall zwischen der ersten Ressource und der dritten Ressource in der Zeitdomäne der zweiten festgelegten Zeit entspricht.

12. Datenübertragungsvorrichtung (300), wobei die Vorrichtung Folgendes umfasst: eine Empfangseinheit (310), wobei die Empfangseinheit zu Folgendem konfiguriert ist:
Erkennen, durch eine zweite Vorrichtung auf einer ersten Ressource, eines ersten Transportblocks, der durch eine erste Vorrichtung gesendet wird; und
Erkennen, auf einer zweiten Ressource, des ersten Transportblocks, der durch die erste Vorrichtung gesendet wird, wobei die erste Ressource und die zweite Ressource in der Zeitdomäne diskontinuierlich sind, wobei ein Intervall zwischen der ersten Ressource und der zweiten Ressource in der Zeitdomäne mit mindestens einer aus einer ersten festgelegten Zeit, die zum Senden erster Feedbackinformationen verwendet wird, und einer zweiten festgelegten Zeit, die zum Senden zweiter Feedbackinformationen verwendet wird, in Beziehung steht,
wobei die ersten Feedbackinformationen dazu verwendet werden, anzugeben, dass der erste Transportblock korrekt empfangen wird oder nicht korrekt empfangen wird, und die zweiten Feedbackinformationen dazu verwendet werden, eine Kanalqualität anzugeben, wobei die Datenübertragungsvorrichtung vor dem Erkennen, auf einer zweiten Ressource, des ersten Transportblocks, der durch die erste Vorrichtung gesendet wird, ferner zu Folgendem konfiguriert ist:
Senden der zweiten Feedbackinformationen an die erste Vorrichtung auf einer dritten Ressource, wobei das Intervall zwischen der ersten Ressource und der zweiten Ressource in der Zeitdomäne größer oder gleich einem Intervall zwischen der ersten Ressource und der dritten Ressource in der Zeitdomäne ist und die dritte Ressource basierend auf der zweiten festgelegten Zeit bestimmt wird; und
wobei die zweiten Feedbackinformationen mindestens eines aus einem Kanalqualitätsindikator, CQI, einem Signal-zu-Interferenz-plus-Rausch-Verhältnis, SINR, einem Signal-zu-Interferenz-Verhältnis, SIR, und einem Modulations- und Kodierungsschema-Niveau, MCS-Niveau, beinhalten;
**dadurch gekennzeichnet, dass** die zweiten Feedbackinformationen dazu verwendet werden, einen Sendeparameter zum Senden des ersten Transportblocks auf der zweiten Ressource anzupassen, wobei der Sendeparameter mindestens eine aus einer Modulationsart, einer Kodierungsart und einer Übertragungsdauer beinhaltet;
die zweite festgelegte Zeit ein Intervall zwischen einem Messen eines Signals und einem Messen von Feedbackinformationen ist, die dem Signal in der Zeitdomäne entsprechen; und
das Intervall zwischen der ersten Ressource und der dritten Ressource in der Zeitdomäne der zweiten festgelegten Zeit entspricht.

13. Computerlesbares Speichermedium, wobei das computerlesbare Speichermedium eine Anweisung speichert und, wenn die Anweisung auf einem Computer ausgeführt wird, der Computer in die Lage versetzt wird, Schritte der Verfahren nach einem der Ansprüche 1 bis 10 durchzuführen.

14. Computerprogrammprodukt, umfassend eine Anweisung, wobei, wenn die Anweisung auf einem Computer ausgeführt wird, der Computer in die Lage versetzt wird, Schritte der Verfahren nach einem der Ansprüche 1 bis 10 durchzuführen.

## Revendications

1. Procédé de transmission de données (100) d'un premier dispositif (200), dans lequel le procédé comprend :
la détermination (110) d'une première ressource et d'une deuxième ressource qui sont utilisées pour envoyer un premier bloc de transport, dans lequel la première ressource et la deuxième ressource sont discontinues dans le domaine temporel ; l'envoi (120) du premier bloc de transport à un second dispositif (300) sur la première ressource ; et
l'envoi (130) du premier bloc de transport au second dispositif sur la deuxième ressource, dans lequel un intervalle entre la première ressource et la deuxième ressource dans le domaine temporel est lié à au moins l'un d'un premier temps défini utilisé pour envoyer des premières informations de rétroaction et d'un second temps défini utilisé pour envoyer des secondes informations de rétroaction,
dans lequel les premières informations de rétroaction sont utilisées pour indiquer que le premier bloc de transport est correctement reçu ou n'est pas correctement reçu, et les secondes informations de rétroaction sont utilisées pour indiquer une qualité de canal, dans lequel avant l'envoi (130) du premier bloc de transport au second dispositif sur la deuxième ressource, le procédé comprend également :
la réception des secondes informations de rétroaction sur une troisième ressource, dans lequel l'intervalle entre la première ressource et la deuxième ressource dans le domaine temporel est supérieur ou égal à un intervalle entre la première ressource et la troisième ressource dans le domaine temporel, et la troisième ressource est déterminée sur la base du second temps défini ; et
dans lequel les secondes informations de rétroaction comportent au moins l'un d'un indicateur de qualité de canal, CQI, d'un rapport signal sur interférence plus bruit, SINR, d'un rapport signal sur interférence, SIR, et d'un niveau de schéma de modulation et de codage, niveau MCS ;
**caractérisé en ce que**
le procédé comprend également :
le réglage d'un paramètre d'envoi sur la base des secondes informations de rétroaction, dans lequel le paramètre d'envoi comporte au moins l'un d'un mode de modulation, d'un mode de codage et d'une durée de transmission ; et
l'envoi du premier bloc de transport sur la deuxième ressource à l'aide du paramètre d'envoi réglé ;
le second temps défini est un intervalle entre la mesure d'un signal et la mesure d'informations de rétroaction correspondant au signal dans le domaine temporel ; et
l'intervalle entre la première ressource et la troisième ressource dans le domaine temporel est égal au second temps défini.

2. Procédé selon la revendication 1, dans lequel la deuxième ressource est une ressource réservée utilisée pour envoyer le premier bloc de transport.

3. Procédé selon la revendication 1 ou 2, dans lequel après l'envoi du premier bloc de transport à un second dispositif sur la première ressource, le procédé comprend également :
la réception des premières informations de rétroaction sur une quatrième ressource, dans lequel la quatrième ressource est déterminée sur la base du premier temps défini ; et
après l'envoi du premier bloc de transport au second dispositif sur la deuxième ressource, le procédé comprend également :
l'envoi du premier bloc de transport au second dispositif sur une cinquième ressource, dans lequel un intervalle entre la première ressource et la cinquième ressource dans le domaine temporel est supérieur ou égal à un intervalle entre la première ressource et la quatrième ressource dans le domaine temporel.

4. Procédé selon la revendication 3, dans lequel l'intervalle entre la première ressource et la cinquième ressource et l'intervalle entre la première ressource et la deuxième ressource sont égaux ou, s'ils ne sont pas égaux, sont partiellement continus et partiellement discontinus ou discontinus, en particulier avec une relation de position des différentes ressources dans le temps de dense à clairsemé ou de clairsemé à dense.

5. Procédé selon la revendication 1, dans lequel avant l'envoi du premier bloc de transport au second dispositif sur la deuxième ressource, le procédé comprend également : la réception des premières informations de rétroaction sur une sixième ressource, dans lequel l'intervalle entre la première ressource et la deuxième ressource dans le domaine temporel est supérieur ou égal à un intervalle entre la première ressource et la sixième ressource dans le domaine temporel, et la sixième ressource est déterminée sur la base du premier temps défini.

6. Procédé selon l'une quelconque des revendications 1 à 5, dans lequel le procédé comprend également :
l'envoi du premier bloc de transport au second dispositif sur la cinquième ressource, dans lequel l'intervalle entre la première ressource et la deuxième ressource dans le domaine temporel est différent d'un intervalle entre la deuxième ressource et la troisième ressource.

7. Procédé de transmission de données (100) d'un second dispositif (300), dans lequel le procédé comprend :
la détection, sur une première ressource, d'un premier bloc de transport envoyé par un premier dispositif (200) ; et
la détection, sur une deuxième ressource, du premier bloc de transport envoyé par le premier dispositif (200), dans lequel la première ressource et la deuxième ressource sont discontinues dans le domaine temporel, dans lequel un intervalle entre la première ressource et la deuxième ressource dans le domaine temporel est lié à au moins l'un d'un premier temps défini utilisé pour envoyer des premières informations de rétroaction et d'un second temps défini utilisé pour envoyer des secondes informations de rétroaction,
dans lequel les premières informations de rétroaction sont utilisées pour indiquer que le premier bloc de transport est correctement reçu ou n'est pas correctement reçu, et les secondes informations de rétroaction sont utilisées pour indiquer une qualité de canal, dans lequel avant la détection, sur une deuxième ressource, du premier bloc de transport envoyé par le premier dispositif, le procédé comprend également :
l'envoi (101) des secondes informations de rétroaction au premier dispositif (200) sur une troisième ressource, dans lequel l'intervalle entre la première ressource et la deuxième ressource dans le domaine temporel est supérieur ou égal à un intervalle entre la première ressource et la troisième ressource dans le domaine temporel, et la troisième ressource est déterminée sur la base du second temps défini ; et
dans lequel les secondes informations de rétroaction comportent au moins l'un d'un indicateur de qualité de canal, CQI, d'un rapport signal sur interférence plus bruit, SINR, d'un rapport signal sur interférence, SIR, et d'un niveau de schéma de modulation et de codage, niveau MCS ;
**caractérisé en ce que** les secondes informations de rétroaction sont utilisées pour régler un paramètre d'envoi pour envoyer le premier bloc de transport sur la deuxième ressource, dans lequel le paramètre d'envoi comporte au moins l'un d'un mode de modulation, d'un mode de codage et d'une durée de transmission ; le second temps défini est un intervalle entre la mesure d'un signal et la mesure d'informations de rétroaction correspondant au signal dans le domaine temporel ; et
l'intervalle entre la première ressource et la troisième ressource dans le domaine temporel est égal au second temps défini.

8. Procédé selon la revendication 7, dans lequel la deuxième ressource est une ressource réservée utilisée pour envoyer le premier bloc de transport.

9. Procédé selon la revendication 7 ou 8, dans lequel après la détection, sur une première ressource, d'un premier bloc de transport envoyé par un premier dispositif, le procédé comprend également :
l'envoi des premières informations de rétroaction au premier dispositif sur une quatrième ressource, dans lequel la quatrième ressource est déterminée sur la base du premier temps défini ; et
après la détection, sur une deuxième ressource, du premier bloc de transport envoyé par le premier dispositif, le procédé comprend également :
la détection du premier bloc de transport sur une cinquième ressource, dans lequel un intervalle entre la première ressource et la cinquième ressource dans le domaine temporel est supérieur ou égal à un intervalle entre la première ressource et la quatrième ressource dans le domaine temporel.

10. Procédé selon la revendication 7, dans lequel avant la détection, sur une deuxième ressource, du premier bloc de transport envoyé par le premier dispositif, le procédé comprend également :
l'envoi des premières informations de rétroaction au premier dispositif sur une sixième ressource, dans lequel l'intervalle entre la première ressource et la deuxième ressource dans le domaine temporel est supérieur ou égal à un intervalle entre la première ressource et la sixième ressource dans le domaine temporel, et la sixième ressource est déterminée sur la base du premier temps défini.

11. Dispositif de transmission de données (200), dans lequel le dispositif est un premier dispositif, et le dispositif comprend :
une unité de traitement (210), configuré pour déterminer (110) une première ressource et une deuxième ressource qui sont utilisées pour envoyer un premier bloc de transport, dans lequel la première ressource et la deuxième ressource sont discontinues dans le domaine temporel ; et
une unité d'envoi (220), dans lequel l'unité d'envoi est configurée pour :
envoyer (120) le premier bloc de transport à un second dispositif sur la première ressource ; et
envoyer (130) le premier bloc de transport au second dispositif sur la deuxième ressource, dans lequel un intervalle entre la première ressource et la deuxième ressource dans le domaine temporel est lié à au moins l'un d'un premier temps défini utilisé pour envoyer des premières informations de rétroaction et d'un second temps défini utilisé pour envoyer des secondes informations de rétroaction,
dans lequel les premières informations de rétroaction sont utilisées pour indiquer que le premier bloc de transport est correctement reçu ou n'est pas correctement reçu, et les secondes informations de rétroaction sont utilisées pour indiquer une qualité de canal, dans lequel le dispositif de transmission de données est configuré pour, avant l'envoi du premier bloc de transport au second dispositif sur la deuxième ressource, également :
recevoir les secondes informations de rétroaction sur une troisième ressource, dans lequel l'intervalle entre la première ressource et la deuxième ressource dans le domaine temporel est supérieur ou égal à un intervalle entre la première ressource et la troisième ressource dans le domaine temporel, et la troisième ressource est déterminée sur la base du second temps défini ; et
dans lequel les secondes informations de rétroaction comportent au moins l'un d'un indicateur de qualité de canal, CQI, d'un rapport signal sur interférence plus bruit, SINR, d'un rapport signal sur interférence, SIR, et d'un niveau de schéma de modulation et de codage, niveau MCS ;
**caractérisé en ce que**
le dispositif de transmission de données est configuré pour :
régler un paramètre d'envoi sur la base des secondes informations de rétroaction, dans lequel le paramètre d'envoi comporte au moins l'un d'un mode de modulation, d'un mode de codage et d'une durée de transmission ; et
envoyer le premier bloc de transport sur la deuxième ressource à l'aide du paramètre d'envoi réglé ;
le second temps défini est un intervalle entre la mesure d'un signal et la mesure d'informations de rétroaction correspondant au signal dans le domaine temporel ; et
l'intervalle entre la première ressource et la troisième ressource dans le domaine temporel est égal au second temps défini.

12. Dispositif de transmission de données (300), dans lequel le dispositif comprend : une unité de réception (310), dans lequel l'unité de réception est configurée pour :
détecter, par un second dispositif sur une première ressource, un premier bloc de transport envoyé par un premier dispositif ; et
la détection, sur une deuxième ressource, du premier bloc de transport envoyé par le premier dispositif, dans lequel la première ressource et la deuxième ressource sont discontinues dans le domaine temporel, dans lequel un intervalle entre la première ressource et la deuxième ressource dans le domaine temporel est lié à au moins l'un d'un premier temps défini utilisé pour envoyer des premières informations de rétroaction et d'un second temps défini utilisé pour envoyer des secondes informations de rétroaction,
dans lequel les premières informations de rétroaction sont utilisées pour indiquer que le premier bloc de transport est correctement reçu ou n'est pas correctement reçu, et les secondes informations de rétroaction sont utilisées pour indiquer une qualité de canal, dans lequel le dispositif de transmission de données est configuré pour, avant la détection, sur une deuxième ressource, du premier bloc de transport envoyé par le premier dispositif, également :
envoyer les secondes informations de rétroaction au premier dispositif sur une troisième ressource, dans lequel l'intervalle entre la première ressource et la deuxième ressource dans le domaine temporel est supérieur ou égal à un intervalle entre la première ressource et la troisième ressource dans le domaine temporel, et la troisième ressource est déterminée sur la base du second temps défini ; et
dans lequel les secondes informations de rétroaction comportent au moins l'un d'un indicateur de qualité de canal, CQI, d'un rapport signal sur interférence plus bruit, SINR, d'un rapport signal sur interférence, SIR, et d'un niveau de schéma de modulation et de codage, niveau MCS ;
**caractérisé en ce que** les secondes informations de rétroaction sont utilisées pour régler un paramètre d'envoi pour envoyer le premier bloc de transport sur la deuxième ressource, dans lequel le paramètre d'envoi comporte au moins l'un d'un mode de modulation, d'un mode de codage et d'une durée de transmission ; le second temps défini est un intervalle entre la mesure d'un signal et la mesure d'informations de rétroaction correspondant au signal dans le domaine temporel ; et
l'intervalle entre la première ressource et la troisième ressource dans le domaine temporel est égal au second temps défini.

13. Support de stockage lisible par ordinateur, dans lequel le support de stockage lisible par ordinateur stocke une instruction, et lorsque l'instruction est exécutée sur un ordinateur, l'ordinateur est activé pour mettre en œuvre les étapes des procédés selon l'une quelconque des revendications 1 à 10.

14. Produit de programme informatique comprenant une instruction, dans lequel lorsque l'instruction est exécutée sur un ordinateur, l'ordinateur est activé pour mettre en œuvre les étapes des procédés selon l'une quelconque des revendications 1 à 10.
